# FASCICULE DE BREVET EUROPEEN

(11) **EP 0 474 527 B1**
(45) Date de publication et mention de la délivrance du brevet: **01.03.1995**
(21) Numéro de dépôt: 91402215.7
(22) Date de dépôt: 09.08.1991
(51) Int. Cl.: C07F 9/40

(54) **Procédé de préparation d'esters de l'acide (cyanofluorométhyl) phosphonique**
Verfahren zur Herstellung von (Cyanofluormethyl)-Phosphonsäureestern
Process for preparing (cyanofluoromethyl) phosphonic acid esters

(30) Priorité: 14.08.1990 FR 9010324
(43) Date de publication de la demande: 11.03.1992
(73) Titulaire: ROUSSEL-UCLAF, 75007 Paris (FR)
(72) Inventeur: Barry, Jean-Marc, F-75019 Paris (FR); Droux, Serge, F-77230 Dammartin en Goele (FR); Gigliotti, Giuseppe, F-75011 Paris (FR)
(74) Mandataire: Fritel, Hubert

(56) Documents cités:
- EP-A- 0 224 417
- CHEMICAL ABSTRACTS, vol. 102, no. 17, 29 Avril 1985, Columbus, Ohio,US; abstract no. 148747, MITSUBISHI CHEMICAL INDUSTRIES: 'jp-a-59212459' page559 ;colonne R ;
- Journal of Chemical Research Synopsis, no.3 1985, pages 92-93, Blackburn et al: 2 a novel synthesis of fluorinated phosphonacetic acids2, en entier

## Description

La présente invention concerne un nouveau procédé de préparation d'esters de l'acide (cyanofluorométhyl) phosphonique.

L'invention a pour objet, un procédé de préparation des composés de formule (I) : 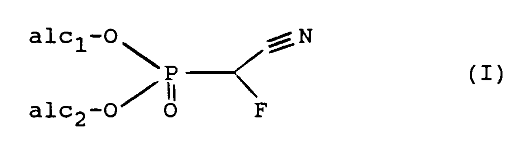
dans laquelle alc₁ et alc₂ identiques ou différents représentent un radical alkyle renfermant jusqu'à 8 atomes de carbone, caractérisé en ce que l'on soumet un composé de formule (II) : 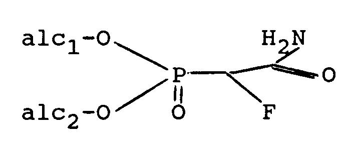
dans laquelle alc₁ et alc₂ conservent leur signification précédente, à l'action d'un agent de déshydratation, pour obtenir le composé de formule (I) correspondant.

Comme agent de déshydratation, on peut par exemple utiliser l'oxychlorure de phosphore, le chlorure de thionyle ou le chlorure de méthanesulfonyle en présence d'une base organique.

L'invention a particulièrement pour objet un procédé de préparation caractérisé en ce que l'agent de déshydratation est l'oxychlorure de phosphore.

L'agent de déshydratation étant de préférence un composé renfermant un halogène, notamment du chlore, on pouvait craindre qu'il se produise des réactions de transhalogénation avec le fluor. Ce n'est pas le cas. Le procédé ci-dessus présente, de ce fait, un caractère inattendu.

Parmi les valeurs que peuvent représenter les substituants alc₁ et alc₂, on peut citer les radicaux méthyle, éthyle, n-propyle, isopropyle, n-butyle.

La valeur préférée de alc₁ et alc₂ est la valeur éthyle.

L'invention a ainsi particulièrement pour objet un procédé de préparation caractérisé en ce que alc₁ et alc₂ représentent un radical éthyle.

Les produits de formule (I) sont des produits connus (cf EP 0224417) qui peuvent être utilisés dans la synthèse de composés pyréthrinoïdes et notamment dans celle des dérivés fluorocyanovinyliques décrits dans le brevet européen 0133406.

Les produits de formule (I) peuvent également être utilisés dans la synthèse de produits fluorés inhibiteurs de la HMG-CoA réductase (HMG-CoA est l'abréviation de 3-hydroxy 3-méthyl glutaryl coenzyme A), c'est-à-dire de produits à visée thérapeutique.

L'invention a également pour objet un procédé tel que défini précédemment, caractérisé en ce que le composé de formule (II) est obtenu en soumettant un composé de formule (III) : 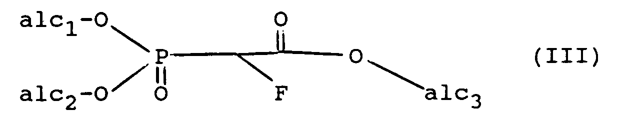
dans laquelle alc₁, alc₂ et alc₃, identiques ou différents les uns des autres, représentent un radical allyle renfermant jusqu'à 8 atomes de carbone, à l'action d'un agent d'amidification, pour obtenir le composé de formule (II) correspondant.

Dans un mode de réalisation préféré du procédé ci-dessus décrit, alc₃ représente un radical méthyle, éthyle, n-propyle, isopropyle, n-butyle ou isobutyle.

L'invention a plus particulièrement pour objet un procédé de préparation dans lequel l'agent d'amidification est l'ammoniaque.

La température de réaction entre le composé (II) et l'ammoniaque est comprise entre -20°C et 30°C.

Le procédé décrit plus haut permet d'obtenir les composés de formule (II) avec d'excellents rendements alors que l'on pouvait s'attendre à des réactions entre le fluor et l'agent d'amidification. C'est ainsi par exemple que dans le cas où l'on utilise l'ammoniaque comme agent d'amidification, on pouvait s'attendre à la formation de fluorure d'ammonium.

La partie expérimentale exposée ci-après montre clairement que l'on obtient le produit de formule (II) dans d'excellentes conditions de rendement et de pureté.

On connaissait déjà un procédé de préparation de composés de formule (I), c'est ainsi que le brevet européen 0224417 déjà cité revendique un procédé par fluoration au moyen du fluor gaz qui peut être schématisé comme suit : 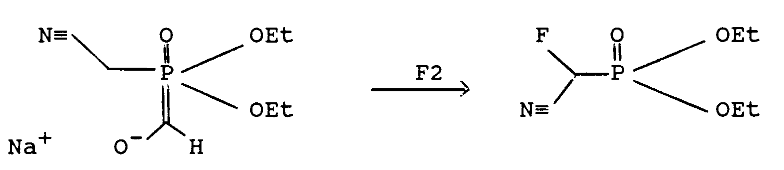
On connaissait également divers procédés de préparation de dérivés fluorés de l'acide phosphorique. On peut citer par exemple les procédés décrits dans J. Med. Chem. 1980, 23, 1077-1083, dans CA 741971, 124736, dans J. Chem. Research (5) 1985 p. 92-93, dans le brevet européen 50534. Ces procédés nécessitent l'utilisation du fluorure de perchloryle. Celle-ci, en particulier au niveau industriel, n'est pas envisageable en raison des risques d'explosions violentes qu'elle entraîne. Quant à l'utilisation du fluor gaz, même dilué dans l'azote, elle implique des installations spécifiques et par là même, des coûts de production importants.

Le procédé de l'invention présente l'avantage d'éviter la manipulation du fluor, ainsi que du fluorure de perchloryle, puisque le fluor est déjà en place dans les produits de formule (III).

Le procédé de l'invention présente en outre l'avantage d'utiliser des réactifs et des solvants courants et bon marché. Sa mise en oeuvre permet donc la préparation industrielle des composés de formule (I).

Les produits de formule (III) peuvent être préparés très simplement, à partir des produits de formule (IV) : 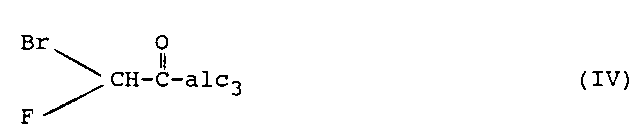
qui sont des produits commerciaux et d'un phosphite approprié. Ainsi, on peut, par exemple, faire réagir le bromo-fluoroacétate de méthyle selon le procédé suivant : 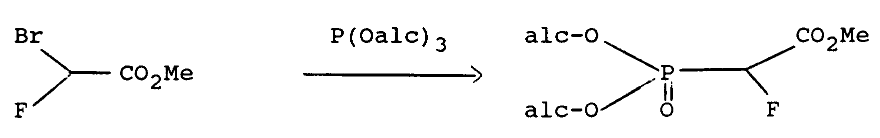
alc représentant un radical alcoyle (cf Guita Etemad - Moghadam et al. Bull Soc. Chim. Fr 1985 448-54).

L'exemple suivant illustre l'invention sans toutefois la limiter.

### EXEMPLE : Ester diéthylique de l'acide (cyanofluorométhyl) phosphonique.

### Stade A : Ester diéthylique de l'acide [(aminocarbonyl) fluorométhyl] phosphonique.

On introduit à 5/10°C, sous arrivée d'azote et sous agitation, 700 cm³ d'ammoniaque 22°Be dans 664 g de (diéthoxyphosphinyl) fluoro acétate de méthyle. On maintient le mélange réactionnel sous agitation pendant 3 heures. On distille l'excès d'ammoniaque sous pression réduite. On sature le milieu réactionnel en chlorure de sodium. On extrait au chlorure de méthylène. On lave avec une solution saturée en chlorure de sodium. On sèche la phase chlorométhylénique. On filtre et amène à sec sous pression réduite. On obtient 646 g de produit recherché brut que l'on dissout dans 1 litre de chlorure de méthylène. On distille sous pression réduite à volume constant, en remplaçant le chlorure de méthylène par l'éther isopropylique. On essore, lave et sèche. On obtient 551,4 g de produit recherché.

| Microanalyse : C₆H₁₃O₄FNP | | | | |
|---|---|---|---|---|
| | C % | H % | N % | P % |
| calculé | 33,8 | 6,15 | 6,57 | 14,53 |
| trouvé | 33,8 | 6,2 | 6,5 | 14,3 |

Spectre IR : (CHCl₃)
=C-NH₂ 3530 cm⁻¹
3496 cm⁻¹
3416 cm⁻¹
C=O 1710 cm⁻¹
NH₂ 1580 cm⁻¹
Spectre RMN : CDCl₃
H des éthyles : 1,36 ppm et 4,25 ppm
H de -CH-F : 5,19 ppm.
Stade B : Ester diéthylique de l'acide [cyanofluorométhyl] phosphonique.

On ajoute à 60/70°C, 480 cm³ d'oxychlorure de phosphore dans une solution renfermant 359 g de produit préparé au stade A et 1900 cm³ de dichloro 1,2-éthane. On maintient le mélange réactionnel sous agitation, pendant 3 heures à 67/70°C. On ramène la température à 20°C. On coule dans 10 litres de solution aqueuse saturée en NaHCO₃. On décante et amène à sec sous pression réduite. On chromatographie le produit obtenu sur silice en éluant avec le mélange hexane acétate d'éthyle (1-1). On obtient ainsi 168 g de produit recherché.
Spectre IR : CHCl₃
1278 cm⁻¹ 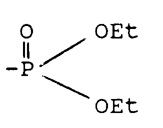
2250 cm⁻¹ -C≡N
Spectre RMN : Proton CDCl₃ 300 MHz
H des éthyles 1,43 et 4,35 ppm
H de PCH-F 5,40 ppm
RMN ³¹P CDCl₃ 300 MHz
6,56 (J_{PF} = 69,5 Hz)
RMN ¹⁹F CDCl₃ 300 MHz
215,5 (J_{HF} = 46 Hz J_{PF} = 69,5 Hz)

## Revendications

1. Procédé de préparation des composés de formule (I) : 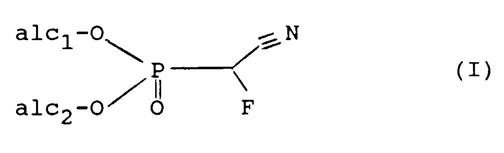 dans laquelle alc₁ et alc₂ identiques ou différents représentent un radical alkyle renfermant jusqu'à 8 atomes de carbone, caractérisé en ce que l'on soumet un composé de formule (II) : 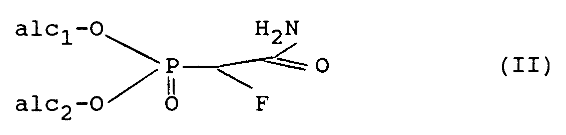 dans laquelle alc₁ et alc₂ conservent leur signification précédente, à l'action d'un agent de déshydratation, pour obtenir le composé de formule (I) correspondant.

2. Procédé selon la revendication 1, caractérisée en ce que l'agent de déshydratation est l'oxychlorure de phosphore.

3. Procédé selon la revendication 1 ou 2, caractérisée en ce que alc₁ et alc₂ représentent chacun un radical éthyle.

4. Procédé selon l'une quelconque des revendications 1 à 3 caractérisé en ce que le produit de formule (II) est préparé par action d'un agent d'amidification sur un composé de formule (III) : 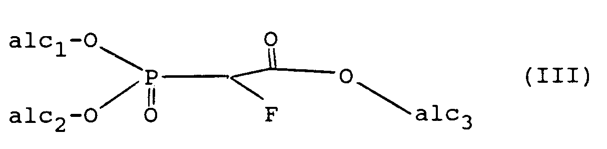 dans laquelle alc₁, alc₂ conservent leur signification précédente et alc₃ représente un radical alkyle renfermant jusqu'à 8 atomes de carbone, pour obtenir le composé de formule (II) correspondant.

5. Procédé selon la revendication 4 caractérisé en ce que l'agent d'amidification est l'ammoniaque.

## Claims

1. Preparation process for the compounds of formula (I): 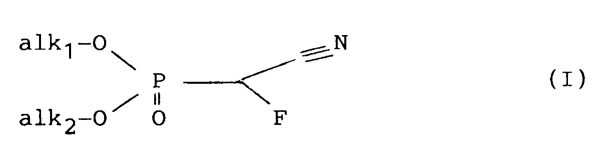 in which alk₁ and alk₂, identical or different, represent an alkyl radical containing up to 8 carbon atoms, characterized in that a compound of formula (II): 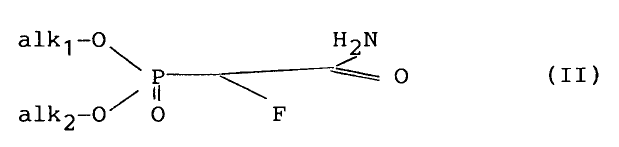 in which alk₁ and alk₂ retain their previous meaning, is subjected to the action of a dehydration agent, in order to obtain the corresponding compound of formula (I).

2. Process according to claim 1, characterized in that the dehydration agent is phosphorus oxychloride.

3. Process according to claim 1 or 2, characterized in that alk₁ and alk₂ each represent an ethyl radical.

4. Process according to any one of claims 1 to 3, characterized in that the product of formula (II) is prepared by the action of an amidification agent on a compound of formula (III): 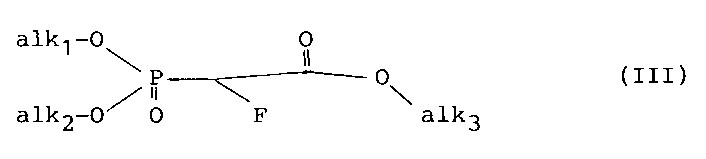 in which alk₁, alk₂ retain their previous meaning and alk₃ represents an alkyl radical containing up to 8 carbon atoms, in order to obtain the corresponding compound of formula (II).

5. Process according to claim 4, characterized in that the amidification agent is ammonium hydroxide.

## Patentansprüche

1. Verfahren zur Herstellung von Verbindungen der Formel (I) 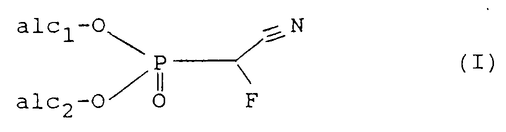 worin alc₁ und alc₂, die gleich oder verschieden sind, für einen Alkylrest mit bis zu 8 Kohlenstoffatomen stehen, dadurch **gekennzeichnet,** daß man eine Verbindung der Formel (II) 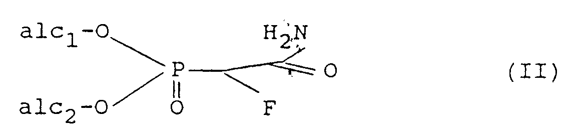 worin alc₁ und alc₂ wie vorstehend definiert sind, der Wirkung eines wasserabspaltenden Mittels unterwirft, wodurch die entsprechende Verbindung der Formel (I) erhalten wird.

2. Verfahren nach Anspruch 1, dadurch **gekennzeichnet,** daß das wasserabspaltende Mittel Phosphoroxychlorid ist.

3. Verfahren nach Anspruch 1 oder 2, dadurch **gekennzeichnet,** daß alc₁ und alc₂ jeweils für eine Ethylgruppe stehen.

4. Verfahren nach einem der Ansprüche 1 bis 3, dadurch **gekennzeichnet,** daß die Verbindung der Formel (II) durch Einwirkung eines Amidierungsmittels auf eine Verbindung der Formel (III) 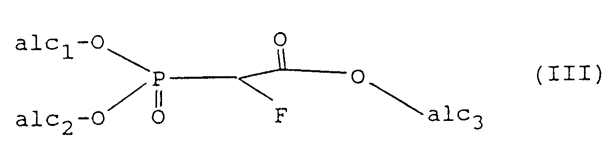 worin alc₁, alc₂ wie vorstehend definiert sind, und alc₃ für einen Alkylrest mit bis zu 8 Kohlenstoffatomen steht, wodurch die entsprechende Verbindung der Formel (II) erhalten wird, hergestellt wird.

5. Verfahren nach Anspruch 4, dadurch **gekennzeichnet,** daß das Amidierungsmittel Ammoniak ist.
